# EUROPÄISCHE PATENTSCHRIFT

(11) **EP 1 911 341 B1**
(45) Veröffentlichungstag und Bekanntmachung des Hinweises auf die Patenterteilung: **26.05.2010**
(21) Anmeldenummer: 07017428.9
(22) Anmeldetag: 06.09.2007
(51) Int. Cl.: A01D 34/14

(54) **Mähmesserrücken und Verfahren zu seiner Herstellung**
Mowing blade support and method for its manufacture
Support de lame de tondeuse et son procédé de fabrication

(30) Priorität: 10.10.2006 AT 7292006
(43) Veröffentlichungstag der Anmeldung: 16.04.2008
(73) Patentinhaber: Busatis GmbH, 3251 Purgstall (AT)
(72) Erfinder: Jordan, Reinhard, Dkfm., 3251 Purgstall (AT)
(74) Vertreter: Grabherr, Claudia

(56) Entgegenhaltungen:
- DE-C- 934 733
- GB-A- 1 020 198
- US-A- 2 133 277

## Beschreibung

Die Erfindung betrifft einen Mähmesserrücken für oszillierende Mähmesser mit Ausnehmungen zur Befestigung der Mähmesserklingen sowie ein Verfahren zur Herstellung eines Mähmesserrückens für oszillierende Mähmesser.

Derartige Mähmesser werden bei Schneidwerken von Erntemaschinen für Halmgut, insbesondere bei Mähdreschern bei der Getreideernte, eingesetzt. Die an der Oberseite des Mähmesserrückens befestigten Mähmesserklingen schneiden das Erntegut in Zusammenwirken mit den starren Mähfingern, die als Gegenschneiden dienen (siehe z.B. US-A-2 133 277).

Die bekannten Mähmesserrücken werden üblicherweise aus unvergütetem Flachstahl mit rechteckigem Querschnitt in Abmessungen zwischen 19 x 5 mm und 22 x 6 mm hergestellt und sind zur Befestigung der einzelnen Mähmesserklingen durch Nieten oder Schrauben mit Ausnehmungen versehen. Diese kreisförmigen Öffnungen zur Klingenbefestigung haben einen Durchmesser von etwa 5,5 bis 6,5 mm und werden in der Regel mittels Lochwerkzeug gestanzt.

Bei modernen Mähdreschern mit großen Schnittbreiten kommen Mähmesser mit Längen über 10 m und Massen über 25 kg, die von einem Ende angetrieben werden, zum Einsatz. Durch die hohe Schnittfrequenz von 500 bis 600 Doppelhüben pro Minute ist der Mähmesserrücken mit 1000 bis 1200 Lastwechseln pro Minute höchster mechanischer Beanspruchung ausgesetzt. Neben den Massenkräften aus der Beschleunigung und Verzögerung der oszillierenden Massen müssen auch noch die Schnittkräfte übertragen werden.

Als Folge dieses andauernd hohen Belastungszustands können Brüche des Messerrückens auftreten, wobei die Bruchstellen bevorzugt antriebsseitig und in jenen verminderten Querschnitten liegen, die sich durch die zur Befestigung der Mähmesserklingen dienenden Ausnehmungen ergeben.

Um diese Messerbrüche zu vermeiden, gibt es verschiedene Bemühungen die Festigkeit des Rückenmaterials zu erhöhen.

Ein Ansatz zur Festigkeitssteigerung liegt in der Verwendung von Ausgangsmaterial höherer Festigkeit oder einem Vergütungsschritt vor dem Lochen. Bei dieser Lösung liegt der Nachteil darin, dass das Lochwerkzeug hoher Beanspruchung und raschem Verschleiß ausgesetzt ist.

Zur Schonung des Lochwerkzeuges wäre es daher günstiger, das Vergüten nach dem Lochen durchzuführen. Nachteilig bei dieser Ausführung ist jedoch, dass es durch das Vergüten zu einer Längenänderung und somit zu einer unzulässigen Verschiebung der Ausnehmungen kommt.

Der Erfindung liegt deshalb die Aufgabe zugrunde, einen Mähmesserrücken der eingangs beschriebenen Art bereitzustellen, der zur Vermeidung von Messerbrüchen eine erhöhte Festigkeit aufweist, ohne die Standzeit des Lochwerkzeugs zu vermindern oder die Genauigkeit der Lochteilung zu beeinträchtigen.

Gemäß der Erfindung wird die Aufgabe dadurch gelöst, dass der Mähmesserrücken in zumindest einem in Längsrichtung verlaufenden Randstreifenabschnitt vergütet ist und in einem mittleren Abschnitt unvergütet ist, wobei der mittlere Abschnitt die Ausnehmungen zur Befestigung der Mähmesserklingen aufweist.

Ein solcher erfindungsgemäßer Mähmesserrücken vereint somit eine erhöhte Festigkeit und einen verbesserten Verschleißwiderstand im Bereich der vergüteten Randstreifenabschnitte mit dem Vorteil, dass im unvergüteten mittleren Abschnitt Ausnehmungen zur Befestigung der Mähmesserklingen hergestellt werden können, deren Herstellung keine erhöhte Beanspruchung des Lochwerkzeuges mit sich bringt und welche Ausnehmungen auch keiner Verschiebung beim nachträglichen Vergüten der Randstreifenabschnitte unterliegen.

In einer bevorzugten Ausführungsform sind beide in Längsrichtung verlaufenden Randstreifenabschnitte des Mähmesserrückens vergütet.

Es ist ein Merkmal der Erfindung, dass der Mähmesserrücken aus gewalztem oder gezogenen Flachstahl hergestellt ist. Des weiteren weisen die vergüteten Randstreifenabschnitte in bevorzugter Weise eine Härte von mindestens 30 HRC auf.

Gemäß einem weiteren Merkmal der Erfindung sind die Randstreifenabschnitte induktiv gehärtet.

Bei dem erfindungsgemäßen Verfahren zur Herstellung eines Mähmesserrückens für oszillierende Mähmesser werden in einem mittleren Abschnitt in Bezug auf die Längsachse Ausnehmungen für die Befestigung der Mähmesserklingen hergestellt, vorzugsweise gestanzt, und des weiteren wird der Mähmesserrücken vor oder nach dem Herstellen der Ausnehmungen in zumindest einem in Längsrichtung verlaufenden Randstreifenabschnitt vergütet. Die Ausnehmungen können somit nach dem Vergüten in den unvergüteten Mittelstreifen ohne zusätzliche Beanspruchung des Lochwerkzeuges gestanzt werden. Bei Vergütung der Randstreifenabschnitte nach dem Stanzen ergeben sich keine Längenänderungen des Mittelstreifens.

Es ist ein weiteres Merkmal des Verfahrens, dass die Randstreifenabschnitte induktiv gehärtet werden. Vorzugsweise wird der Mähmesserrücken im Durchzugsverfahren vergütet.

Es kann weiters vorteilhaft sein, die Härte der Randstreifenabschnitte in Längsrichtung zu variieren. Die vergüteten Randstreifenabschnitte können sich auch nur über einen oder mehrere Teilabschnitte des Messerrückens erstrecken.

Weitere vorteilhafte Merkmale der Erfindung sind den Ansprüchen, der Beschreibung sowie der beiliegenden Zeichnung zu entnehmen.

Ferner ist vorzugsweise die Breite, d.h. die Abmessung normal zur Längsrichtung, des mittleren unvergüteten Abschnitts größer oder gleich der Abmessung einer Ausnehmung in dieser Richtung.

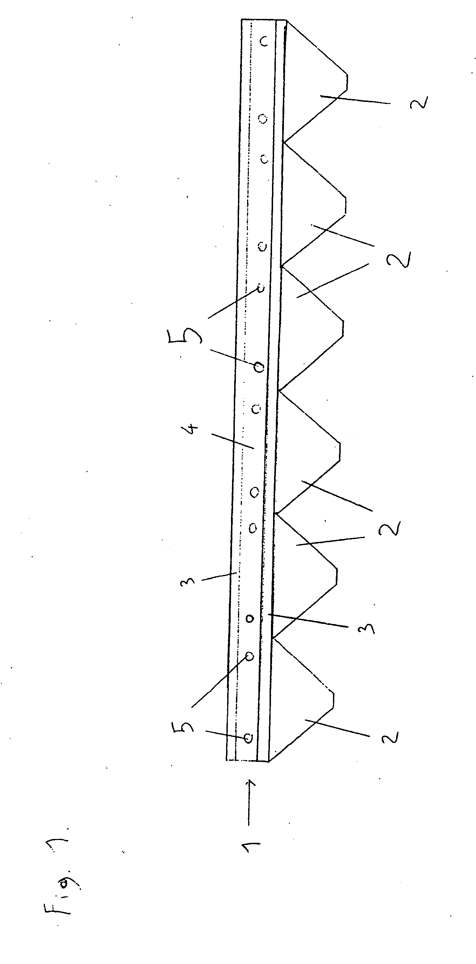

Fig. 1 zeigt eine Aufsicht auf einen erfindungsgemäßen Mähmesserrücken.

Der in Fig. 1 gezeigte Mähmesserrücken 1 weist einen mittleren Abschnitt 4 mit Löchern 5 auf, über welche die einzelnen Mähmesserklingen 2 mit dem Mähmesserrücken befestigt sind. In der gezeigten Ausführungsform sind die beiden Randstreifenabschnitte 3 jeweils vergütet und der mittlere Abschnitt 4 unvergütet.

Der so erhaltene Mähmesserrücken 1 weist eine weit höhere Festigkeit auf als bisher verwendete Mähmesserrücken, wobei gleichzeitig die Stanzwerkzeuge für die Löcher 5 nicht mehr als normal beansprucht werden. Ob der Vergütungsschritt vor oder nach dem Stanzen der Löcher 5 erfolgt, spielt dabei keine Rolle. Bei Vergütung der Randstreifenabschnitte 3 vor dem Stanzen der Löcher 5 ergibt sich für das Stanzen kein Unterschied, da der mittlere Abschnitt 4 unvergütet bleibt. Erfolgt die Vergütung nach dem Stanzen der Löcher, so ergeben sich für den mittleren Abschnitt 4 keine wesentlichen Änderungen in den Abständen der gestanzten Löcher.

## Patentansprüche

1. Mähmesserrücken für oszillierende Mähmesser mit Ausnehmungen zur Befestigung der Mähmesserklingen, **dadurch gekennzeichnet, dass** der Mähmesserrücken (1) in zumindest einem in Längsrichtung verlaufenden Randstreifenabschnitt (3) vergütet ist und in einem mittleren Abschnitt (4) unvergütet ist, wobei der mittlere Abschnitt (4) die Ausnehmungen (5) zur Befestigung der Mähmesserklingen aufweist.

2. Mähmesserrücken nach Anspruch 1, **dadurch gekennzeichnet, dass** beide in Längsrichtung verlaufenden Randstreifenabschnitte (3) des Mähmesserrückens (1) vergütet sind.

3. Mähmesserrücken nach Anspruch 1 oder 2, **dadurch gekennzeichnet, dass** der Mähmesserrücken (1) aus gewalztem oder gezogenem Flachstahl hergestellt ist.

4. Mähmesserrücken nach einem der Ansprüche 1 bis 3, **dadurch gekennzeichnet, dass** die vergüteten Randstreifenabschnitte (3) eine Härte von mindestens 30 HRC aufweisen.

5. Mähmesserrücken nach einem der Ansprüche 1 bis 4, **dadurch gekennzeichnet, dass** die Randstreifenabschnitte (3) induktiv gehärtet sind.

6. Mähmesserrücken nach einem der Ansprüche 1 bis 5, **dadurch gekennzeichnet, dass** die Härte der Randstreifenabschnitte (3) in Längsrichtung variiert.

7. Mähmesserrücken nach einem der Ansprüche 1 bis 6, **dadurch gekennzeichnet, dass** sich die Randstreifenabschnitte (3) über einen oder mehrere Teilabschnitte des Messerrückens erstrecken.

8. Mähmesserrücken nach einem der Ansprüche 1 bis 7, **dadurch gekennzeichnet, dass** die Breite, d.h. die Abmessung normal zur Längsrichtung, des mittleren unvergüteten Abschnitts (4) größer oder gleich der Abmessung einer Ausnehmung (5) in dieser Richtung ist.

9. Verfahren zur Herstellung eines Mähmesserrückens für oszillierende Mähmesser nach einem der Ansprüche 1 bis 8, bei dem in einem mittleren Abschnitt in Bezug auf die Längsachse Ausnehmungen für die Befestigung der Mähmesserklingen hergestellt, vorzugsweise gestanzt, werden, **dadurch gekennzeichnet, dass** vor oder nach dem Herstellen der Ausnehmungen (5) der Mähmesserrücken (1) in zumindest einem in Längsrichtung verlaufenden Randstreifenabschnitt (3) vergütet wird.

10. Verfahren zur Herstellung eines Mähmesserrückens nach Anspruch 9, **dadurch gekennzeichnet, dass** die Randstreifenabschnitte (3) induktiv gehärtet werden.

11. Verfahren zur Herstellung eines Mähmesserrückens nach Anspruch 9 oder 10, **dadurch gekennzeichnet, dass** der Mähmesserrücken (1) im Durchzugsverfahren vergütet wird.

## Claims

1. Mowing knife back for an oscillating mowing knive having recesses for fastening the mowing knife blades, **characterized in that** the mowing knife back (1) is heat treated in at least one longitudinally running edge strip section (3) and is not heat treated in a central section (4), wherein the central section (4) has the recesses (5) for fastening the mowing knife blades.

2. Mowing knife back according to Claim 1,
**characterized in that** both longitudinally running edge strip sections (3) of the mowing knife back (1) are heat treated.

3. Mowing knife back according to Claim 1 or 2, **characterized in that** the mowing knife back (1) is produced from rolled or drawn flat steel.

4. Mowing knife back according to one of Claims 1 to 3, **characterized in that** the heat-treated edge strip sections (3) have a hardness of at least 30 HRC.

5. Mowing knife back according to one of Claims 1 to 4, **characterized in that** the edge strip sections (3) are inductively hardened.

6. Mowing knife back according to one of Claims 1 to 5, **characterized in that** the hardness of the edge strip sections (3) varies in the longitudinal direction.

7. Mowing knife back according to one of Claims 1 to 6, **characterized in that** the edge strip sections (3) extend over one or more partial sections of the knife back.

8. Mowing knife back according to one of Claims 1 to 7, **characterized in that** the width, i.e. the dimension normal to the longitudinal direction, of the central non-heat-treated section (4) is greater than or equal to the dimension of a recess (5) in this direction.

9. Method for producing a mowing knife back for an oscillating mowing knife according to one of Claims 1 to 8, in which recesses for fastening the mowing knife blades are produced, preferably punched, in a central section with respect to the longitudinal axis, **characterized in that** before or after the production of the recesses (5) the mowing knife back (1) is heat treated in at least one longitudinally running edge strip section (3).

10. Method for producing a mowing knife back according to Claim 9, **characterized in that** the edge strip sections (3) are inductively hardened.

11. Method for producing a mowing knife back according to Claim 9 or 10, **characterized in that** the mowing knife back (1) is heat treated in the pull-through process.

## Revendications

1. Dos de lame de coupe pour lame de coupe oscillante, pourvu d'évidements pour fixer les sections de lame de coupe, **caractérisé en ce que** le dos de lame de coupe (1) est trempé et revenu dans au moins une portion de bande de rive (3) s'étendant dans la direction longitudinale et n'est pas trempé et revenu dans une portion médiane (4), la portion médiane (4) étant pourvue des évidements (5) pour fixer les sections de lame de coupe.

2. Dos de lame de coupe selon la revendication 1,
**caractérisé en ce que** les deux portions de bande de rive (3) s'étendant dans la direction longitudinale du dos de lame de coupe (1) sont trempées et revenues.

3. Dos de lame de coupe selon la revendication 1 ou 2, **caractérisé en ce que** le dos de lame de coupe (1) est réalisé en acier plat laminé ou étiré.

4. Dos de lame de coupe selon une des revendications 1 à 3, **caractérisé en ce que** les portions de bande de rive trempées et revenues (3) présentent une dureté d'au moins 30 HRC.

5. Dos de lame de coupe selon une des revendications 1 à 4, **caractérisé en ce que** les portions de bande de rive (3) sont trempées par induction.

6. Dos de lame de coupe selon une des revendications 1 à 5, **caractérisé en ce que** la dureté des portions de bande de rive (3) varie dans la direction longitudinale.

7. Dos de lame de coupe selon une des revendications 1 à 6, **caractérisé en ce que** les portions de bande de rive (3) s'étendent sur une ou plusieurs portions partielles du dos de lame.

8. Dos de lame de coupe selon une des revendications 1 à 7, **caractérisé en ce que** la largeur, c'est-à-dire la dimension perpendiculaire à la direction longitudinale, de la portion médiane non trempée et revenue (4) est supérieure ou égale à la dimension d'un évidement (5) dans cette direction.

9. Procédé de fabrication d'un dos de lame de coupe pour lames de coupe oscillantes selon une des revendications 1 à 8, dans lequel des évidements pour fixer les sections de lame de coupe sont réalisés, de préférence estampés, dans une portion médiane par rapport à l'axe longitudinal, **caractérisé en ce que**, avant ou après la réalisation des évidements (5), le dos de lame de coupe (1) est trempé et revenu dans au moins une portion de bande de rive (3) s'étendant dans la direction longitudinale.

10. Procédé de fabrication d'un dos de lame de coupe selon la revendication 9, **caractérisé en ce que** les portions de bande de rive (3) sont trempées par induction.

11. Procédé de fabrication d'un dos de lame de coupe selon la revendication 9 ou 10, **caractérisé en ce que** le dos de lame de coupe (1) est trempé et revenu selon un procédé de traitement en continu.
